# EUROPÄISCHE PATENTSCHRIFT

(11) **EP 3 064 992 B1**
(45) Veröffentlichungstag und Bekanntmachung des Hinweises auf die Patenterteilung: **22.09.2021**
(21) Anmeldenummer: 15000665.8
(22) Anmeldetag: 06.03.2015
(51) Int. Cl.: G02F 1/39, G02F 1/35

(54) **OPTISCHES SYSTEM UND VERFAHREN**
OPTICAL SYSTEM AND METHOD
SYSTÈME ET PROCÉDÉ OPTIQUES

(43) Veröffentlichungstag der Anmeldung: 07.09.2016
(73) Patentinhaber: Baden-Württemberg Stiftung gGmbH, 70174 Stuttgart (DE)
(72) Erfinder: Giessen, Harald, 67297 Marnheim (DE); Steinle, Tobias, 70499 Stuttgart (DE); Steinmann, Andy, 70825 Korntal-Münchingen (DE)
(74) Vertreter: Müller-Boré & Partner Patentanwälte PartG mbB

(56) Entgegenhaltungen:
- WO-A1-2015/006494
- US-A1- 2009 168 148
- BRIAN G SAAR ET AL: "Intracavity wavelength modulation of an optical parametric oscillator for coherent Raman microscopy", OPT. EXPRESS, Bd. 17, Nr. 15, 20. Juli 2009 (2009-07-20) , Seiten 12532-12539, XP55211836, DOI: 10.1364/OE.17.012532
- YAMAC DIKMELIK ET AL: "Plane-Wave Dynamics of Optical Parametric Oscillation with Simultaneous Sum-Frequency Generation", IEEE JOURNAL OF QUANTUM ELECTRONICS, IEEE SERVICE CENTER, PISCATAWAY, NJ, USA, Bd. 35, Nr. 6, 1. Juni 1999 (1999-06-01), XP011052221, ISSN: 0018-9197
- None

## Beschreibung

Die Erfindung betrifft ein optisches System und ein Verfahren zur Bereitstellung zumindest eines hochfrequenten modulierten Lichtpulses.

Zur Modulation von Laserpulsen, die typischerweise von modengekoppelten Oszillatoren bereitgestellt werden, können mechanische Chopper, elektrooptische Modulatoren (abgekürzt: EOM), akustooptische Modulatoren (abgekürzt: AOM) oder eine direkte Modulation von Diodenstromstärken verwendet werden. Dabei erreichen mechanische Methoden, also z.B. eine Modulation mit einem mechanischen Chopper, lediglich eine Modulationsfrequenz von einigen 10 kHz. Akustooptische Modulatoren und elektrooptische Modulatoren sind auf einen Modulationsbereich von maximal ca. 50 MHz limitiert und benötigen weiterhin eine teure Leistungselektronik zum Ansteuern der Modulation. Dieses Limit gilt insbesondere für die Modulation gepulster Laser mit hoher Durchschnittsleistung größer als 10 mW und kurzer Pulsdauer kleiner als 10 ps, für welche die vorliegende Erfindung verwendet werden kann. Direkt modulierte Dioden sind nicht in der Lage, Pulse im Femtosekundenbereich zu modulieren, sondern sind limitiert auf die Modulation von Pulsen mit einer maximalen Länge von einigen 100 Picosekunden oder Nanosekunden. Auch bei den direkt modulierten Dioden ist eine Modulation im Hochfrequenzbereich technisch sehr anspruchsvoll. Weiterhin sind die bekannten Methoden zur Modulation aktiv gesteuert, d.h. die Modulation erfolgt mit Hilfe einer Steuerelektronik.

Dokument Brian G. Saar et al.: "Intracavity wavelength modulation of an optical parametric oscillator for coherent Raman microscopy" betrifft einen synchrongepumpten optische parametrischen Oszillator (abgekürzt:OPO), in dem ein elektrisch durchstimmbarer Lyot-Filter mit einer Pockelszelle eingesetzt wird, um eine Wellenlänge zu modulieren.

Dokument US 2009/0168148 A1 betrifft einen OPO mit einem intra-cavity Modelocker, der als eine Saphir-Platte ausgebildet ist, die einen optischen Kerr-Effekt aufweist. Mit dem OPO werden unmodulierte ultrakurze Pulse bereitgestellt.

Dokument WO 2015/006494 A1 betrifft einen OPO, bei dem eine Modulation mittels elektrooptischer Modulatoren erfolgt.

Y. Dikmelik et al., IEEE J. Quant. Electron. 35 (1999) 897 offenbart eine periodische Amplitudenmodulation des Ausgangs eines OPO durch den zusätzlichen Einfluss einer SFG in dem OPO.

Der Erfindung liegt die Aufgabe zugrunde, eine Modulation im hochfrequenten Bereich bereitzustellen, insbesondere für kurze Lichtpulse mit einer kurzen Pulsdauer z.B. im Femtosekundenbereich. Dabei liegt der Erfindung insbesondere die Aufgabe zugrunde, eine kostengünstige Modulation von Lichtpulsen mit sehr hohen Frequenzen zu ermöglichen.

Diese Aufgabe wird durch die Gegenstände der unabhängigen Ansprüche gelöst. Bevorzugte weitere Ausführungsformen sind die Gegenstände der abhängigen Ansprüche.

Ein erster Aspekt betrifft ein optisches System zur Bereitstellung zumindest eines hochfrequenten modulierten Lichtpulses mit einer Pumplichtquelle zur Bereitstellung von hochfrequenten Pumplichtpulsen. Das optische System weist weiterhin einen optischen Resonator auf, der ein Einkoppelelement zum Einkoppeln der Pumplichtpulse in den Resonator aufweist und ein Auskoppelelement zum Auskoppeln des zumindest einen hochfrequenten modulierten Lichtpulses aus dem Resonator. Im Resonator ist ein optisch nichtlineares Frequenzkonversionsmedium zum Umwandeln der Pumplichtpulse in jeweils zwei Konversionslichtpulse und einen Restpumplichtpuls angeordnet. Dabei weist der Resonator einen Feedbackarm für zumindest einen der zwei Konversionslichtpulse und/oder den Restpumplichtpuls auf. In dem Feedbackarm ist ein optisch nichtlineares Feedbackmedium zur optischen Modulation des zumindest einen Konversionslichtpulses und/oder des Restpumplichtpulses angeordnet, für den der Feedbackarm ausgebildet und vorgesehen ist.

Das optische System dient zur Bereitstellung eines hochfrequenten modulierten Lichtpulses. Im Rahmen dieser Erfindung wird unter Hochfrequenz eine Frequenz von mindestens 10 kHz verstanden, bevorzugt zumindest 100 kHz. Besonders bevorzugt betreffen hochfrequente Frequenzen Frequenzen im Megahertzbereich. Grundsätzlich sind den Frequenzen nach oben hin keine Grenzen gesetzt, insbesondere kann die Erfindung auch bei Frequenzen bis in den einstelligen Gigahertzbereich verwendet werden.

Der vom optischen System bereitgestellte Lichtpuls ist in seiner Amplitude moduliert. Dies bedeutet, dass das optische System eine Abfolge von Lichtpulsen der gleichen Zentralwellenlänge bereitstellt, die bezüglich ihrer Amplitude moduliert sind.

Die Pumplichtquelle kann als gepulster Laser ausgebildet sein, der die hochfrequenten Pumplichtpulse als zunächst unmodulierte Pumplichtpulse bereitstellt.

Die Pumplichtpulse werden am Einkoppelelement in den optischen Resonator eingekoppelt und innerhalb des Resonators vom Frequenzkonversionsmedium umgewandelt. Diese Umwandlung erfolgt unter Wechselwirkung mit dem Frequenzkonversionsmedium. Diese Wechselwirkung erfolgt als optisch nichtlineare Wechselwirkung, bei der zumindest ein Leistungsanteil der Pumplichtpulse umgewandelt wird. Ein weiterer (z.B. restlicher) Leistungsanteil der Pumplichtpulse wird nicht im Frequenzkonversionsmedium umgewandelt, sondern durchläuft das Frequenzkonversionsmedium ohne Wechselwirkung und verlässt es mit unveränderter Wellenlänge als Restpumplichtpuls. Der Restpumplichtpuls weist eine geringere Amplitude als der Pumplichtpuls auf, da er bei der Wechselwirkung mit dem Frequenzkonversionsmedium an Energie verloren hat. Diese Energie wird in die zwei Konversionslichtpulse umgewandelt. Dabei werden zumindest zwei Konversionslichtpulse generiert, deren Wellenlänge sich jeweils von der Wellenlänge des Pumplichtpulses unterscheidet. Dabei kann die Energie des Pumplichtpulses vollständig in die beiden Konversionslichtpulse umgewandelt werden. Es können weiterhin auch Verluste auftreten, bzw. ein dritter oder weiterer Konversionslichtpuls gebildet werden. Bevorzugt wird der Pumplichtpuls im Frequenzkonversionsmedium jedoch in genau zwei Konversionslichtpulse umgewandelt, während ein nicht umgewandelter Leistungsanteil des Pumplichtpulses das Frequenzkonversionsmedium als Restpumplichtpuls verlässt.

Der Restpumplichtpuls weist im Wesentlichen dieselbe Wellenlänge auf wie der Pumplichtpuls. Die beiden Konversionslichtpulse weisen eine andere Wellenlänge auf als der Pumplichtpuls und somit auch als der Restpumplichtpuls. Die beiden Konversionslichtpulse können die gleiche Wellenlänge aufweisen oder eine voneinander verschiedene Wellenlänge.

Der Feedbackarm des Resonators ist für zumindest einen derjenigen Lichtpulse ausgebildet und vorgesehen, der das Frequenzkonversionsmedium verlässt. Dies kann zum Beispiel ein erster der zwei Konversionslichtpulse sein, ein zweiter der zwei Konversionslichtpulse und/oder der Restpumplichtpuls. Der Feedbackarm kann entweder für den Umlauf dieses einen der drei voranstehend genannten Lichtpulse ausgebildet sein, oder für den Umlauf von zwei oder allen der voranstehend genannten Lichtpulse. Bevorzugt sind der Feedbackarm und das Feedbackmedium für genau einen dieser drei Lichtpulse ausgebildet und vorgesehen.

Durch Wechselwirkung dieses einen Lichtpulses der drei voranstehend genannten Lichtpulse mit dem optisch nichtlinearen Feedbackmedium wird der Lichtpuls in seiner Amplitude moduliert. Dabei hängt die Stärke der Modulation, also die Stärke der Wechselwirkung mit dem Feedbackmedium, von der Intensität und somit der Amplitude des Lichtpulses ab.

Zur Einfachheit der Darstellung wird derjenige der Lichtpulse, zu dessen Aufnahme der Feedbackarm ausgebildet und vorgesehen ist, im Rahmen dieser Anmeldung als Feedbacklichtpuls bezeichnet. Der Feedbacklichtpuls ist somit insbesondere einer der folgenden Lichtpulse:
- der erste der zwei Konversionslichtpulse,
- der zweite der zwei Konversionslichtpulse oder
- der Restpumplichtpuls.

Der Feedbacklichtpuls wird im Feedbackarm im Feedbackmedium amplitudenmoduliert und zurückgespeist in den Teil des Resonators, in dem das Frequenzkonversionsmedium angeordnet ist. Genauer wird im Feedbackarm in zunächst die Phase des Feedbacklichtpulses moduliert, was eine Modulation der Spitzenamplitude bewirkt. Es erfolgt somit eine Selbstphasenmodulation. Dabei kann das Feedbackmedium insbesondere auf die Wellenlänge und/oder Amplitude des Feedbacklichtpulses hin ausgewählt und/oder abgestimmt sein.

Die optische Länge des Feedbackarms kann so ausgebildet und vorgesehen sein, dass ein aus dem Feedbackarm zurückgekoppelter Feedbacklichtpuls im Wesentlichen zusammen mit einem nachfolgenden Pumplichtpuls durch das Frequenzkonversionsmedium läuft. Dafür kann die optische Länge des Resonators insbesondere so einstellbar sein, dass der Feedbackpuls mit dem ersten nachfolgenden Pumplichtpuls zusammen durch das Frequenzkonversionsmedium läuft, oder mit dem zweiten nachfolgenden Pumplichtpuls, oder mit dem dritten nachfolgenden Pumplichtpuls, usw.

Der Feedbacklichtpuls weist eine derjenigen Lichtwellenlänge auf, in die der nachfolgende Pumplichtpuls im Frequenzkonversionsmedium "zerlegt" wird. Deswegen ist die optisch nichtlineare Umwandlung des nachfolgenden Pumplichtpulses, der zusammen mit dem Feedbacklichtpuls das Frequenzkonversionsmedium durchläuft, stärker ausgeprägt als die Umwandlung eines Pumplichtpulses ohne Feedbacklichtpuls. Deswegen erfolgt die Frequenzkonversion im Frequenzkonversionsmedium in die zwei Konversionslichtpulse und den Restpumplichtpuls mit unterschiedlich starken Amplituden, abhängig u.a. von der Amplitude des Feedbacklichtpulses. Dadurch erfolgt für alle am Auskoppelelement ausgekoppelten Lichtpulse eine Amplitudenmodulation.

Das Auskoppelelement kann mehrteilig ausgebildet sein und mehrere Einzelbauteile aufweisen. Die Einzelbauteile des Auskoppelelements können so ausgebildet sein, dass sie einerseits den Feedbacklichtpuls (wie z.B. den Signalpuls) zu einem einstellbaren Leistungsanteil zurückführen in den Feedbackarm und somit auch nur zu einem einstellbaren Leistungsanteil auskoppeln. Weiterhin können die Einzelbauteile des Auskoppelelements so ausgebildet sein, dass sie wellenlängensensitiv gezielt die übrigen Lichtpulse im Wesentlichen vollständig auskoppeln, wie z.B. den Restpumplichtpuls und den Idlerpuls.

In anderen Worten basiert die Modulation des Feedbacklichtpulses auf einer Abhängigkeit der Stärke der nichtlinearen Wechselwirkung mit dem Feedbackmedium von der Amplitude des Feedbacklichtpulses. Die Amplitude des Feedbacklichtpulses ist wiederum von der Stärke der nichtlinearen Wechselwirkung im Frequenzkonversionsmedium abhängig. Die Stärke und/oder Ausprägung dieser beiden optisch nichtlinearen Wechselwirkungen kann für einzelne Umläufe im Resonator unterschiedlich sein. Die Stärke und/oder Ausprägung der Wechselwirkungen kann z.B. periodisch unterschiedlich stark ausgeprägt sein, was eine periodische Modulation bewirkt.

Als der hochfrequente modulierte Lichtpuls, der von dem optischen System bereitgestellt wird, kann z.B. der ausgekoppelte Restpumplichtpuls verwendet werden, oder einer der ausgekoppelten zwei Konversionslichtpulse, oder zwei oder drei der vorgenannten Lichtpulse. Einzelne oder mehrere der voranstehend genannten ausgekoppelten Lichtpulse können als modulierter Pulszug bereitgestellt werden. Bevorzugt wird zumindest einer der Konversionslichtpulse als Feedbacklichtpuls verwendet, und nicht der Restpumplichtpuls. Bei Verwendung zumindest eines der Konversionslichtpulse als Feedbacklichtpuls können besonders verlustarme Bauteile als Einkoppelelement und/oder als Auskoppelelement verwendet werden. Dies liegt z.B. daran, dass die Konversionslichtpulse eine andere Wellenlänge als der Restpumplichtpuls aufweisen und deswegen spezifisch von dem Ein- und Auskoppelelement angesteuert werden können.

Das optische System ermöglicht somit eine rein passive Modulation von hochfrequenten Lichtpulsen ohne teure bzw. komplexe Leistungselektronik bzw. Steuerelektronik. Die Modulation kann rein passiv und insbesondere rein optisch erfolgen. Dies stellt einen Vorteil gegenüber dem Stand der Technik dar im Hinblick auf die Kosten des Systems, im Hinblick auf die Betriebskosten, und im Hinblick auf den modulierbaren Frequenzbereich. Das optische System ermöglicht eine Modulation von besonders hochfrequenten Lichtpulsen, die zum Beispiel eine Pulsdauer im Femtosekundenbereich aufweisen.

Das optische System kann insbesondere als eine optische Vorrichtung mit mehreren Systemkomponenten wie der Pumplichtquelle und dem optischen Resonator ausgebildet sein.

Gemäß einer Ausführungsform ist eine nichtlineare Phasenverschiebung des zumindest einen der zwei Konversionslichtpulse und/oder des Restpumplichtpulses im Feedbackmedium auf einen Attraktor des optischen Systems eingestellt. Somit ist insbesondere die nichtlineare Phasenverschiebung des Feedbacklichtpulses auf den Attraktor des optischen Systems eingestellt. Die beobachtete Modulation erfolgt somit in einem Attraktor des dynamischen, optischen Systems als eine Art "stabiler Zustand" des optischen Systems. Zum Einstellen des Systems auf einen Attraktor ist die nichtlineare Phasenverschiebung des Feedbacklichtpulses genau auf einen Attraktor eingestellt. Abhängig von den Amplituden (und somit von den Pulsenergien und Pulsleistungen) der einzelnen im Resonator umlaufenden Pulse kann sich ein Attraktor einstellen, der in einer stabilen Amplitudenmodulation resultiert. Die nichtlineare Phasenverschiebung im Feedbackmedium kann zum Beispiel durch eine Steuerung der Pulsenergie der eingekoppelten Pumplichtpulse erfolgen, und/oder durch eine Steuerung eines Auskoppelgrades des Auskoppelelements für einen oder alle im Resonator umlaufenden Pulse. Ist das optische System auf einen Attraktor eingestellt, ist die Modulation besonders stabil gegenüber Leistungsschwankungen oder anderen Einflüssen. Weiterhin ist in einem Attraktor die Modulation besonders deutlich ausgeprägt, so dass sich die hochfrequent modulierten Lichtpulse besonders gut für diverse Anwendungen eignen.

Gemäß einer Ausführungsform ist der Resonator als optisch parametrischer Oszillator (abgekürzt: OPO) ausgebildet, der von den Pumplichtpulsen synchron gepumpt ausgebildet ist, und der die beiden Konversionslichtpulse als Signalpuls und Idlerpuls erzeugt. OPOs sind aus dem Stand der Technik hinlänglich bekannt. Auch die Generation eines Signalpulses und Idlerpulses im nichtlinearen Frequenzkonversionsmedium in einem OPO ist vorbekannt. Der synchron gepumpte OPO gemäß dieser Ausführungsform weist jedoch einen Feedbackarm für den Feedbacklichtpuls mit Feedbackmedium auf. Weiterhin ist der synchron gepumpte OPO so eingestellt und/oder justiert, dass eine Amplitudenmodulation zumindest eines der bereitgestellten hochfrequenten Lichtpulse erfolgt. Der bereitgestellte hochfrequente Lichtpuls kann insbesondere der Idlerpuls, der Signalpuls und/oder der Restpumplichtpuls sein.

Gemäß einer Weiterbildung dieser Ausführungsform wird im Feedbackarm genau einer der folgenden drei Pulse optisch moduliert:
- der Signalpuls,
- der Idlerpuls oder
- der Restpumplichtpuls.

Dabei bewirkt die optische Modulation eines der drei voranstehenden Pulse eine dazu korrelierte Modulation der anderen beiden der voranstehenden Pulse. Hierbei wird also entweder der Signalpuls, der Idlerpuls oder der Restpumplichtpuls als Feedbacklichtpuls verwendet. Bevorzugt wird der Signalpuls oder der Idlerpuls als Feedbacklichtpuls verwendet, und nicht der Restpumplichtpuls. Abhängig von der Amplitude des Feedbacklichtpulses erfolgt eine unterschiedlich starke nichtlineare Wechselwirkung mit dem Feedbackmedium und somit Modulation des Feedbacklichtpulses. Ist die Amplitude des Feedbacklichtpulses zum Beispiel klein, erfolgt eine schwache nichtlineare Wechselwirkung mit dem Feedbackmedium, wobei der Feedbacklichtpuls kaum bis gar nicht moduliert wird. Ist der Feedbacklichtpuls vergleichsweise stark und weist eine hohe Amplitude auf, so ist die Wechselwirkung mit dem Feedbackmedium stark, wobei die vormals große Amplitude des Feedbacklichtpulses auf eine sehr kleine Amplitude des Feedbacklichtpulses moduliert wird. Diese wird zurückgeführt und zusammen mit einem nachfolgenden Pumplichtpuls durch das Frequenzkonversionsmedium geleitet. Abhängig von der Amplitudengröße des zurückgeführten Feedbacklichtpulses ist die Stärke der nichtlinearen Frequenzkonversion im Frequenzkonversionsmedium.

Über diesen Zusammenhang im optischen System sind sowohl der Signalpuls, der Idlerpuls als auch der Restpumplichtpuls korreliert miteinander moduliert. Jeder dieser drei Lichtpulse kann einzeln und/oder gemeinsam mit den anderen beiden als hochfrequenter modulierter Lichtpuls und/oder Pulszug verwendet werden, nachdem die Lichtpulse über das Auskoppelelement aus dem Resonator ausgekoppelt worden sind. Damit stellt das optische System nicht nur einen hochfrequent modulierten Lichtpuls zur Verfügung, sondern drei hochfrequente modulierte Lichtpulse, z.B. in Form eines Pulszuges, die miteinander korreliert sind, also in einer festen Beziehung zueinander stehen.

Gemäß einer Ausführungsform stellt die Pumplichtquelle die hochfrequenten Pumplichtpulse mit einer Repetitionsrate von zumindest einem Megahertz bereit. Dies entspricht einem typischen Hochfrequenzsignalpuls. Die hochfrequenten modulierten Lichtpulse können dabei eine Modulationsfrequenz bis zu der halben Repetitionsfrequenz der Pumplichtpulse aufweisen. Dies ist für eine Amplitudenmodulation von Pulsen die maximal erreichbare Modulationsfrequenz.

In einem speziellen Beispiel kann als Pumplichtquelle ein Ytterbium-dotierter Kalium-Gadolinium-Wolframat-Kristall-Laser verwendet werden, abgekürzt: Yb:KGW. Diese Laser kann z.B. Pumplichtpulse einer Wellenlänge von ca. 1040 nm bereitstellen mit einer Repetitionsrate von ca. 41 MHz, einer Pulsdauer von ca. 500 Femtosekunden und einer Durchschnittsleistung von ca. 2 bis 3 Watt. Diese Durchschnittsleistung von ca. 2 bis 3 Watt zum Pumpen des optischen Systems kann auf einem abgespaltenen Anteil von ursprünglich ca. 8 Watt Leistung der Pumplichtquelle beruhen, die ursprünglich von der Pumplichtquelle bereitgestellt werden. In einer anderen Ausführungsform wird als Pumplichtquelle ein Yb:KYW oder Yb:CALGO (Kalium-Yttrium-Wolframat bzw. CaGdAlO4 Laser) verwendet.

Gemäß einer Ausführungsform wird der Restpumplichtpuls und/oder zumindest einer der zwei Konversionslichtpulse als der hochfrequente modulierte Lichtpuls aus dem Resonator ausgekoppelt. Dabei kann es sich insbesondere um den Feedbacklichtpuls handeln. Genauso kann aber auch einer der anderen beiden Lichtpulse als der modulierte hochfrequente Lichtpuls verwendet werden. Da die drei erwähnten Lichtpulse miteinander korreliert sind, kann jeder der drei Lichtpulse als modulierter Lichtpuls verwendet werden.

Gemäß einer Ausführungsform stellt die Pumplichtquelle zunächst hochfrequente Ausgangslichtpulse bereit, die ein Strahlteiler aufteilt in die hochfrequenten Pumplichtpulse zum Einkoppeln in den Resonator einerseits, und in hochfrequente Referenzlichtpulse andererseits. Damit stellt das optische System nicht nur die modulierten Lichtpulse bereit, sondern auch hochfrequente Referenzlichtpulse. Diese sind mit den modulierten Lichtpulsen korreliert. Die Referenzlichtpulse selber können dabei unmoduliert sein, weswegen sie besonders gut als Referenz zu den modulierten Lichtpulsen für verschiedene Anwendungen verwendet werden können. Der Strahlteiler kann insbesondere als ansteuerbarer Strahlteiler ausgebildet sein, so dass der Leistungsanteil der Pumplichtpulse steuerbar ist, der in den optischen Resonator eingespeist wird. Somit kann durch Ansteuerung des Strahlteilers die im Resonator befindliche Energie und Leistung angesteuert werden, insbesondere eine davon abhängige nichtlineare Phasenverschiebung im Feedbackarm und/oder im Frequenzkonversionsmedium.

Gemäß einer Weiterbildung dieser Ausführungsform ist das optische System dazu ausgebildet und vorgesehen, die hochfrequenten Referenzlichtpulse so bereitzustellen, dass diese mit den hochfrequenten modulierten Lichtpulsen korreliert sind. Das System kann dafür zum Beispiel Mittel zum Einstellen einer optischen Weglänge der Referenzlichtpulse und/oder der modulierten Lichtpulse aufweisen, mit denen die Pulse zeitlich synchronisiert werden können..

In einer Weiterbildung dieser Ausbildungsform sind die hochfrequenten Referenzlichtpulse und die hochfrequenten modulierten Lichtpulse als Stokespulse und Pumppulse in einem Ramanmikroskop ausgebildet und vorgesehen. Hierbei können zum Beispiel die unmodulierten Referenzlichtpulse als Stokespulse verwendet werden, und einer der beiden Konversionslichtpulse als modulierte Lichtpulse als Pumppulse verwendet werden. Hierbei kann das Frequenzkonversionsmedium so ausgewählt und/oder ausgebildet sein, dass sich eine für die Ramanmikroskopie geeignete Wellenlänge eines der beiden Konversionslichtpulse ergibt. Diese kann z.B. nach der Modulation im optischen System durch eine entsprechende Wechselwirkung verändert werden, zum Beispiel durch einen Frequenzverdoppler wie z.B. einen SHG-Kristall etc. Das optische System kann somit als Teil eines stimulierten Ramanmikroskops ausgebildet sein, für das bevorzugt modulierte Lichtpulse zusammen mit unmodulierten Referenzlichtpulsen verwendet werden, um ein wohldifferenziertes Ramanspektrum als Mikroskopieergebnis zu erhalten.

Gemäß einer Ausführungsform weist das optische System eine Leistungseinstellvorrichtung zum Einstellen der Leistung der in den Resonator eingekoppelten Pumplichtpulse auf. Da sowohl die Wechselwirkung mit dem Frequenzkonversionsmedium als auch die Wechselwirkung mit dem Feedbackmedium von der Amplitude der im Resonator befindlichen Pulse abhängt, bietet die Leistungseinstellvorrichtung eine Möglichkeit, die Modulation im optischen System einzustellen und/oder zu justieren, insbesondere auf einen Attraktor des optischen Systems. Die Leistungseinstellvorrichtung kann zum Beispiel als Leistungsregelung der Pumplichtquelle ausgebildet sein. Die Pumplichtquelle kann zum Beispiel als ein gepulster Laser ausgebildet sein, dessen Leistung einstellbar ist. Alternativ oder zusätzlich kann ein Strahlteiler vorgesehen sein, der einen bestimmten Leistungsanteil aus ursprünglich emittierten Ausgangslichtpulsen abspaltet und als Pumplichtpulse bereitstellt. Alternativ oder zusätzlich kann auch ein optischer Abschwächer verwendet werden.

Gemäß einer Ausführungsform ist der Auskoppelgrad des Auskoppelelements einstellbar ausgebildet. Der Auskoppelgrad kann sowohl für einen bestimmten der im Resonator befindlichen Pulse einstellbar ausgebildet sein, als auch für zwei, drei oder alle im Resonator befindlichen Pulse, also insbesondere den beiden Konversionslichtpulsen und dem Restpumplichtpuls. Das Auskoppelelement kann so ausgebildet und einstellbar sein, dass der Restpumplichtpuls und einer der beiden Konversionslichtpulse im Wesentlichen vollständig ausgekoppelt werden, während der andere der zwei Konversionslichtpulse als Feedbacklichtpuls zu einem einstellbaren Anteil in den Feedbackarm umgelenkt wird. Der Auskoppelgrad kann also insbesondere für die Leistung des Feedbacklichtpuls einstellbar ausgebildet sein auf einen Umlenkgrad zwischen 90% und 100% und einen zugehörigen Auskoppelgrad zwischen 10% und 0%.

Die Steuerung des Auskoppelgrads stellt neben der Steuerung der Leistung der Pumplichtpulse eine zusätzliche oder optionale Möglichkeit dar, die im optischen Resonator befindliche Leistung einzustellen. Je nachdem wieviel Leistung des Feedbacklichtpulses in den Feedbackarm umgelenkt wird, ergeben sich unterschiedliche nichtlineare Phasenverschiebungen in den beiden optischen nichtlinearen Medien. Somit kann das optische System durch die Steuerung und/oder Einstellung der Leistung im Resonator auf einen Attraktor eingestellt werden.

Der Auskoppelgrad des Auskoppelelements kann insbesondere durch eine Steuerung der Polarisation eines, mehrerer oder aller im Resonator befindlichen Pulse erfolgen. Hierbei kann der Auskoppelgrad durch Verwendung zumindest eines Polarisationsstrahlteilers (abgekürzt: PST) zusammen mit entsprechenden λ/4- und/oder λ/2-Plättchen etc. im Resonator einstellbar sein.

Gemäß einer Ausführungsform erfolgen alle Reflexionen und nichtlinearen Wechselwirkungen im Inneren des optischen Resonators polarisationserhaltend. Dies vereinfacht eine Steuerung des Auskoppelgrades für alle im Resonator befindlichen Lichtpulse, z.B. mittels PST als Bestandteil des Auskoppelelements.

Gemäß einer Ausführungsform ist das Auskoppelelement so ausgebildet und angeordnet, dass der Restpumplichtpuls und ein erster der zwei Konversionslichtpulse vollständig ausgekoppelt werden, während der zweite der zwei Konversionslichtpulse zumindest teilweise in den Feedbackarm umgelenkt wird. Wie beschrieben kann dieser zweite der Konversionslichtpulse als der Feedbacklichtpuls verwendet werden.

Gemäß einer Ausführungsform ist der Feedbackarm als separater Feedbackarm ausgebildet, der räumlich getrennt ist von einem Resonatorarm des Resonators, in dem das Frequenzkonversionsmedium angeordnet ist. In dieser Ausführungsform kann der Feedbacklichtpuls besonders genau und unabhängig vom Feedbackmedium moduliert werden. Die räumliche Trennung ermöglicht auch eine besonders genaue Einstellung der optischen Länge des Feedbackarms, der auf die Repetitionsrate der Pumplichtpulse sowie deren Pulsdauer abgestimmt sein kann.

Gemäß einer Ausführungsform ist der vom optischen System bereitgestellte hochfrequente Lichtpuls ausschließlich optisch moduliert. Das System kann dabei vollständig ohne weitere teure Leistungselektronik ausgebildet sein. Insbesondere kann das System ohne akustooptischen Wandler und ohne elektrooptischen Wandler die Modulation bereitstellen. Dies ermöglicht die Implementierung eines kostengünstigen Systems zur Modulation im hochfrequenten Bereich. Die Modulation ist damit passiv und/oder automatisch auf die Repetitionsrate synchronisiert.

Das Feedbackmedium und das Frequenzkonversionsmedium können als separate nichtlineare Medien ausgebildet sein, die z.B. in separaten Armen des Resonators angeordnet sind.

In einer Ausführungsform ist das Frequenzkonversionsmedium zugleich als Feedbackmedium ausgebildet. In dieser Ausführungsform kann der Feedbackarm mit dem Resonatorarm zusammenfallen, in dem das Frequenzkonversionsmedium angeordnet ist. Dabei kann der Resonator im Wesentlichen linear ausgebildet sein. Der Feedbacklichtpuls läuft dabei in dem linearen Resonatorarm um, in den auch die Pumplichtpulse eingekoppelt werden, und erfährt bei Durchgang durch das Frequenzkonversionsmedium eine Wechselwirkung, die zur gewünschten Modulation führt.

Hierbei kann der Feedbacklichtpuls mehrere Umläufe, z.B. zwischen 2 und 50 Umläufe, im Resonator vornehmen, bevor er wieder mit einem nachfolgenden Pumplichtpuls zusammenfällt. In diesem Fall genügt also die Verwendung eines einzigen nichtlinearen Mediums zur Realisierung der modulierten hochfrequenten Lichtpulse.

Ein zweiter Aspekt betrifft ein Verfahren zum Bereitstellen zumindest eines hochfrequenten modulierten Lichtpulses. Dabei werden hochfrequente Pumplichtpulse bereitgestellt, die in einen optischen Resonator eingekoppelt werden. Im Resonator werden die Pumplichtpulse optisch nichtlinear umgewandelt in jeweils zwei Konversionslichtpulse und einen Restpumplichtpuls. Der zumindest eine hochfrequente modulierte Lichtpuls wird aus dem Resonator ausgekoppelt. Dabei wird in einem Feedbackarm des Resonators zumindest einer der zwei Konversionslichtpulse und/oder der Restpumplichtpuls mittels eines optisch nichtlinearen Feedbackmediums optisch moduliert.

Das Verfahren kann insbesondere mit einem optischen System gemäß dem ersten Aspekt durchgeführt werden. Somit betrifft die Beschreibung des optischen Systems auch das Verfahren gemäß dem zweiten Aspekt und umgekehrt.

Ein dritter Aspekt betrifft die Verwendung des optischen Systems gemäß erstem Aspekt zum Durchführen des Verfahrens gemäß dem zweiten Aspekt.

Die Erfindung wird nachfolgend anhand von in Figuren gezeigten Ausführungsbeispielen näher erläutert. Einzelne, in den Figuren dargestellte Merkmale können in anderen Ausführungsformen implementiert sein. Es zeigt:
- Figur 1: in einer schematischen Darstellung ein Ausführungsbeispiel eines optischen Systems zum Bereitstellen eines hochfrequenten modulierten Lichtpulses;
- Figur 2a: in einem Diagramm einen hochfrequenten Pumplichtpuls für ein optisches System gemäß einem Ausführungsbeispiel zusammen mit mehreren von dem optischen System modulierten hochfrequenten Lichtpulsen in Form von Pulszügen;
- Figur 2b: in einem Diagramm die Fouriertransformierten zu den in Figur 2a gezeigten Pulszügen im Frequenzraum;
- Figur 3: in einer schematischen Darstellung ein Ausführungsbeispiel eines optischen Systems zum Bereitstellen von modulierten hochfrequenten Lichtpulsen implementiert in einem Ramanmikroskop;
- Figur 4: in einem Histogramm Bifurkationen von Pulszügen eines optischen Systems in Abhängigkeit von der Pumpleistung des optischen Systems; und
- Figur 5: in einem Diagramm ein Ramanspektrum von Aceton.

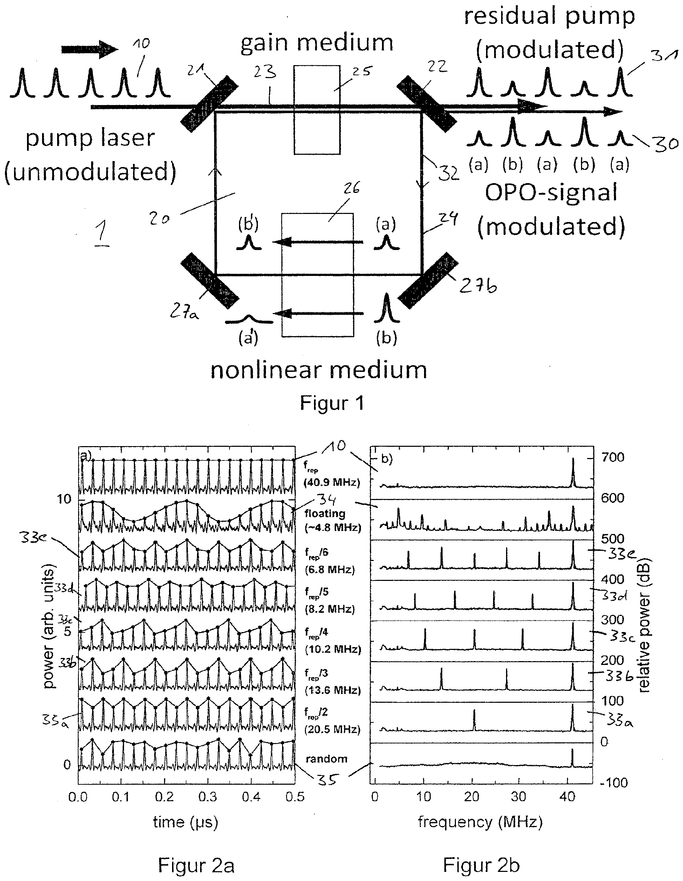

**Figur 1** zeigt in einer schematischen Darstellung ein optisches System 1 zum Bereitstellen hochfrequenter modulierter Lichtpulse. Von einer in Figur 1 nicht dargestellten Punktlichtquelle, die z.B. als ein gepulster Laser ausgebildet sein kann, werden Pumplichtpulse 10 bereitgestellt. Die Pumplichtpulse 10 sind nicht moduliert und weisen deswegen (wie in Figur 1 gezeigt) alle eine im Wesentlichen gleich große Amplitude auf.

Die Pumplichtpulse 10 werden in einen optischen Resonator 20 des optischen Systems 1 eingekoppelt, und zwar über ein Einkoppelelement 21. Das Einkoppelelement 21 kann zum Beispiel einen Polarisationsstrahlteiler und/oder halbdurchlässiger Spiegel aufweisen. Insbesondere kann das Einkoppelelement 21 als ein dichroitischer Spiegel ausgebildet sein, der für die Pumplichtpulse 10 transmittiv ausgebildet ist, und für einen Feedbacklichtpuls 32 (vgl. nachfolgende Ausführungen) reflektiv.

Die Pumplichtpulse 10 durchlaufen anschließend an das Einkoppelelement 21 einen ersten Resonatorarm 23 des Resonators 20. Im ersten Resonatorarm 23 ist ein Frequenzkonversionsmedium 25 angeordnet. Das Frequenzkonversionsmedium 25 ist als ein optisch nichtlineares Medium ausgebildet, wie es üblicherweise in optisch parametrischen Oszillatoren (abgekürzt: OPO) verwendet wird. Die Frequenzkonversion kann hierbei beispielsweise durch Differenzfrequenzerzeugung oder durch Vierwellenmischen erfolgen. Im Frequenzkonversionsmedium 25 wird ein erster Anteil der Pumplichtpulse 10 in zumindest oder genau zwei Konversionslichtpulse umgewandelt, zum Beispiel in einen Signalpuls und einen Idlerpuls. Ein zweiter Anteil der Pumplichtpulse 10 durchläuft das Frequenzkonversionsmedium 25 ohne nichtlineare Wechselwirkung und verlässt das Frequenzkonversionsmedium 25 als Restpumplichtpuls 31.

Nach der Wechselwirkung mit dem Frequenzkonversionsmedium 25 breiten sich die drei Pulse (also die beiden Konversionslichtpulse und der Restpumplichtpuls) weiter im ersten Resonatorarm 23 aus in Richtung zu einem Auskoppelelement 22 hin. Der erste Resonatorarm 23 kann sich vom Einkoppelelement 21 über das Frequenzkonversionsmedium 25 hin bis zum Auskoppelelement 22 erstrecken. Der erste Resonatorarm kann linear ausgebildet sein. Am Auskoppelelement 22 kann ein Teil der im Inneren des Resonators 20 befindlichen Pulse ausgekoppelt werden.

In der in Figur 1 gezeigten Ausführungsform wird am Auskoppelelement 22 der Restpumplichtpuls 31 im Wesentlichen vollständig ausgekoppelt, genauso wie einer der beiden Konversionslichtpulse, zum Beispiel der Idlerpuls, im Wesentlichen vollständig ausgekoppelt wird. Ein Teil des anderen der zwei Konversionslichtpulse, also z.B. der Signalpuls, wird am Auskoppelelement 22 zu einem Teil nicht ausgekoppelt, sondern in einen Feedbackarm 24 des Resonators 20 umgelenkt. Das Auskoppelelement 22 kann einstellbar und/oder variabel ausgebildet sein, was bedeutet, dass sowohl die Stärke des auszukoppelnden als auch des umzulenkenden Anteils des Feedbacklichtpulses 32 einstellbar und/oder variabel ist. Alternativ kann das Auskoppelelement 22 auch als fixes Bauteil ausgebildet sein, wenn der Fixwert des Auskoppels und Umlenkens passend gewählt ist. Der Auskoppelgrad des Auskoppelelements 22 kann für die im Resonator 20 umlaufenden Pulszüge unterschiedliche Werte aufweisen.

Der optische Resonator 20 ist im Wesentlichen in Form eines Rechtecks ausgebildet, wobei an den vier Ecken des Rechtecks jeweils ein Umlenkspiegel angeordnet ist. Einer dieser Umlenkspiegel ist als das Einkoppelelement 21 ausgebildet, ein weiterer der Umlenkspiegel ist als das Auskoppelelement 22 ausgebildet. Der erste Resonatorarm 23 ist als eine der Rechteckseiten des Resonators 20 ausgebildet. Die anderen drei Rechteckseiten des Resonators 20 bilden den Feedbackarm 24.

Allgemein erstreckt sich der Feedbackarm 24 vom Auskoppelelement 22 hin über eine geeignete Umlenkung zurück in den ersten Resonatorarm 23, z.B. zurück zum Einkoppelelement 21.

Dabei sind in dem in Figur 1 gezeigten Ausführungsbeispiel ein erster Umlenkspiegel 27a und ein zweiter Umlenkspiegel 27b vorgesehen, um den in den Feedbackarm 24 eingekoppelten Puls vom Auskoppelelement entlang des Feedbackarmes 24 hin zum Einkoppelelement 21 zu führen.

Der am Auskoppelelement 22 in dem Feedbackarm umgelenkte Puls, also z.B. einer der beiden Konversionslichtpulse, wie der Signalpuls, wird vom Auskoppelelement als Feedbacklichtpuls 32 in den Feedbackarm 24 eingekoppelt.

Allgemein besteht der Feedbacklichtpuls 32 aus dem Anteil an Lichtpulsen, die (z.B. vom Auskoppelelement 22) aus dem ersten Resonatorarm 23 in den Feedbackarm 24 umgelenkt werden.

Im Feedbackarm 24 ist ein Feedbackmedium 26 als ein optisch nichtlineares Medium angeordnet. In der in den Figuren gezeigten Ausführungsform ist das Feedbackmedium zwischen dem ersten Umlenkspiegel 27a und dem zweiten Umlenkspiegel 27b angeordnet. Das Feedbackmedium 26 könnte jedoch auch an einer anderen Position des Feedbackarmes 24 angeordnet sein.

Der Feedbacklichtpuls 32 wechselwirkt mit dem Feedbackmedium 26 auf eine optisch nichtlineare Art und Weise. Die Stärke der Wechselwirkung hängt von der Amplitude des Feedbacklichtpulses 32 ab. In dem in Figur 1 gezeigten Ausführungsbeispiel durchläuft der Feedbacklichtpuls 32 das Feedbackmedium 26 vom ersten Umlenkspiegel 27a her in Richtung zum zweiten Umlenkspiegel 27b hin.

### Beispielhafte Modulationseinstellunq des optischen Systems

Schematisch ist in Figur 1 eine mögliche Modulation gezeigt, auf die das optische System 1 eingestellt ist. In einer schematisch rechts vom Feedbackmedium 26 gezeigten Pulsform weist der Feedbacklichtpuls 32 eine mittelgroße Amplitude auf, die in Figur 1 als Pulsform (a) gekennzeichnet ist. Durchläuft ein Feedbacklichtpuls mit einer solchen mittelgroßen Amplitude (a) das Feedbackmedium 26, so erfährt es dabei kaum eine Änderung und verlässt das Feedbackmedium als Feedbacklichtpuls 32 mit der als (b') gezeigten Pulsform. Diese Pulsform (b') ist links vom Feedbackmedium 26 gezeigt und weist ebenfalls eine mittelgroße Amplitude auf und unterscheidet sich kaum von der vorherigen Amplitudenhöhe, die rechts vom Feedbackmedium 26 als Pulsform (a) gezeigt ist. In dem Fall, in dem der in den Feedbackarm 24 umgelenkte Feedbacklichtpuls 32 eine mittelgroße Amplitude (a) aufweist, wird auch ein Feedbacklichtpuls 32 mit einer mittelgroßen Amplitude (b') am Einkoppelelement 21 zurück in den ersten Resonatorarm 23 gekoppelt.

Das optische System 1 ist synchron gepumpt. Dies bedeutet, dass der zurückgekoppelte Feedbacklichtpuls 32 im Wesentlichen zeitgleich mit einem nachfolgenden Pumplichtpuls 10 am Einkoppelelement 21 in den ersten Resonatorarm 23 eingekoppelt wird. Damit verstärkt der Feedbacklichtpuls 32 mit der mittelgroßen Amplitude (b') den Pumplichtpuls 10 und durchläuft zusammen mit ihm das Frequenzkonversionsmedium 25.

Der aus dem Feedbacklichtpuls 32 mit mittelgroßer Amplitude (b') und dem nachfolgenden Pumplichtpuls 10 bestehende Pulszug weist insgesamt eine höhere Leistung und Intensität auf als ein Pumplichtpuls 10 alleine. Somit erfolgt für den verstärkten Pulszug im Frequenzkonversionsmedium 25 eine stärkere nichtlineare Wechselwirkung als für einen Pumplichtpuls alleine. Es wird hierbei auch ein größerer Leistungsanteil des Pumplichtpulses 10 umgewandelt in die beiden Konversionslichtpulse, also z.B. den Signalpuls und den Idlerpuls. In diesem Fall, der in Figur 1 schematisch als Pulsform (b) gezeigt ist, verlässt der Restpumplichtpuls 31 den Resonator 20 mit einer kleinen Amplitude, während ein Feedbacklichtpuls 32 mit einer großen Amplitude (b) in den Feedbackarm 24 zurückgekoppelt wird. Dies ist rechts vom Feedbackmedium 26 schematisch gezeigt als Pulsform (b) mit einer hohen Amplitude.

Da dieser Feedbacklichtpuls mit der Pulsform (b) eine höhere Energie aufweist als der Feedbacklichtpuls mit der mittelgroßen Pulsform (a), findet in diesem Fall eine stärkere nichtlineare optische Wechselwirkung mit dem Feedbackmedium 26 statt. Der große Feedbacklichtpuls mit der Pulsform (b) wird somit umgewandelt in einen aufgeweiteten kleinen Feedbacklichtpuls mit einer Pulsform (a'). In diesem Falle wird somit ein Feedbacklichtpuls mit einer kleinen Amplitude (a') zurückgekoppelt in den ersten Resonatorarm 23 und zusammen mit einem nachfolgenden Pumplichtpuls 10 als Pulszug durch das Frequenzkonversionsmedium 25 gesendet.

Der Pulszug bestehend aus dem Feedbacklichtpuls 32 mit kleiner Amplitude (a') und dem nachfolgenden Pumplichtpuls 10 weist eine niedrigere Leistung und Intensität auf als ein Pumplichtpuls 10 zusammen mit einem Feedbacklichtpuls 32 mit einer mittelgroßen Amplitude (b'). Deswegen findet in diesem Fall eine weniger stark ausgeprägte Frequenzkonversion im Frequenzkonversionsmedium 25 statt. Dabei wird ein Restpumplichtpuls mit einer relativ großen Amplitude erzeugt, zusammen mit zwei Konversionslichtpulsen mit einer zum Beispiel mittelgroßen Amplitude (b).

Die entsprechenden, am Auskoppelelement 22 ausgekoppelten Lichtpulse sind schematisch als Pulsformen (a) und (b) in Figur 1 neben dem Auskoppelelement 22 gezeigt. So weist immer dann, wenn der Restpumplichtpuls 31 eine hohe Amplitude aufweist, ein modulierter Lichtpuls 30 eine kleine Amplitude auf und umgekehrt. Als modulierter Lichtpuls 30 kann z.B. einer der beiden Konversionslichtpulse verwendet werden, z.B. der auch als Feedbacklichtpuls verwendete Lichtpuls (im Bsp. der Signalpuls). Der andere Konversionslichtpuls kann entweder verworfen oder ebenfalls als ein modulierter Lichtpuls ausgekoppelt werden.

Hierbei beziehen sich die Ausdrücke "groß" und "klein" auf die Spitzenamplitude des Feedbacklichtpulses, nicht unbedingt auf die Pulsenergie insgesamt. Das Feedbackmedium lässt die Pulsenergie weitgehend konstant und ändert die Pulsform und die Spitzenamplitude des Feedbacklichtpulses. Dieser Effekt wirkt sich über das Frequenzkonversionsmedium bzw. Verstärkungsmedium auch auf die Pulsenergie des neu generierten und damit des nächsten ausgekoppelten und zurückgeführten Lichtpulses aus. Insofern wird der Feedbacklichtpuls durch die Änderung von Pulsform und Spitzenamplitude im Feedbackmedium zu einem schwächeren bzw. "modulierten" zurückgekoppelten Feedbacklichtpuls.

Die Modulationseinstellung des optischen Systems 1 ist abhängig von der Leistung der im Resonator umlaufenden Pulse. Alternativ zu der in Figur 1 beispielhaft gezeigten Modulationseinstellung des optischen Systems 1 mit den resultierenden Pulsform (a) und (b) kann das System 1 auch auf eine andere Modulation eingestellt sein.

Das System 1 stellt eine rein optische Modulation eines modengekoppelten Pulszuges bereit. Das System 1 kann als optisch parametrischer Oszillator mit einem nichtlinearen Feedback ausgebildet sein. Der gezeigte OPO mit nichtlinearem Feedback ermöglicht die Amplitudenmodulation an hochfrequenten Lichtpulsen.

Das Frequenzkonversionsmedium 25 kann z.B. als ein stark nichtlineares Medium mit nichtverschwindender Suszeptibilität zweiter Ordnung ausgebildet sein, als periodisch gepoltes Lithiumniobat (PPLN) oder -tantalat (PPLT) in kongruenter (PPcLN, PPcLT) oder stöchiometrischer Form (PPsLN, PPsLT), als "orientation-patterned gallium arsenide" (OP-GaAs), als ein "bulk" Kristall und/oder als ein Wellenleiter. Das Frequenzkonversionsmedium 25 kann auch als ein FWM Material (four-wave mixing, Vierwellenmischen) implementiert sein, z.B. in einer "tapered fiber" oder einer "photonic crystal fiber" (PCF). Das Frequenzkonversionsmedium 25 kann gleichzeitig auch die Funktion des nichtlinearen Feedbackmediums 26 übernehmen, wenn die Geometrie des Resonators 20 entsprechend ausgebildet ist.

Das Feedbackmedium 26 kann als nichtlineares Medium mit z.B. verschwindender Suszeptibilität zweiter Ordnung ausgebildet sein. Für den Effekt der Selbstphasenmodulation ist die Suszeptibilität dritter Ordnung relevant, welche in allen Medien nichtverschwindend ist. So kann das Feedbackmedium 26 als eine Art von optischer Faser, Wellenleiter oder nichtlinearer Kristalle ausgebildet sein. Dabei können beinahe alle bekannten Materialien zur Herstellung dieser Elemente verwendet werden. In einem speziellen Ausführungsbeispiel kann das Feedbackmedium 26 als eine SMF-28 (Telekomglasfaser) ausgebildet sein. In einer Ausführungsform kann das nichtlineare Feedbackmedium 26 identisch mit dem nichtlinearen Frequenzkonversionsmedium 25 sein.

Das optische System 1 ermöglicht die Modulation eines zuvor unmodulierten Signalpulses, insbesondere eines Lasersignalpulses. Dabei betrifft das System 1 zum Beispiel die Modulation von Pulszügen eines Ultrakurzpulslasers mit Pulsdauern im Femto- oder Picosekundenbereich.

Das optische System 1 ermöglicht es, eine maximale Modulationsfrequenz, die der Hälfte der Repetitionsrate entspricht, auf einen Pulszug von ultrakurzen Pulsen aufzubringen. Dadurch lassen sich bei Verfahren wie zum Beispiel Pump-Probe-Messungen sowie bei Mikroskopieverfahren wie der stimulierten Ramanmikroskopie oder der CARS-Mikroskopie ("coherent anti-Stokes Raman scattering") Pulszüge mit mehreren 10 MHz modulieren. Dieser Frequenzbereich ist intrinsisch extrem rauscharm, da Rauschen proportional zu 1/f ist. Deswegen werden durch das optische System 1 modulierte Pulszüge mit sehr gutem Signal-zu-Rausch-Verhältnissen bereitgestellt.

Der Feedbackarm 24 kann einstellbar in seiner optischen Länge ausgebildet sein. Dadurch kann die optische Weglänge im Feedbackarm 24 genau auf den Abstand zwischen den Pumplichtpulsen 10 angepasst werden. Das Feedbackmedium 26 dient als modulierendes Element, das den Feedbacklichtpuls passiv und rein optisch moduliert.

Um die beteiligten Pulsenergien ideal einzustellen, also z.B. auf einen Attraktor des optischen Systems 1, kann ein Auskoppelgrad des Auskoppelelements 22 einstellbar sein. Über diese Einstellmöglichkeit kann die nichtlineare Phasenverschiebung des Feedbacklichtpulses im Resonator 20 eingestellt werden, und damit die Stärke und Art und Weise der nichtlinearen Wechselwirkungen in den beiden optisch nichtlinearen Medien (Feedbackmedium 26 und Frequenzkonversionsmedium 25). Über die Einstellung der im Resonator befindlichen Pulsleistungen lassen sich die optischen Effekte im Resonator genau einstellen auf eine gewünschte Modulationseinstellung, also auf eine vorbestimmbare Modulation der erzeugten modulierten Lichtpulse 30.

Die Amplitudenmodulation im optischen System 1 erfolgt also durch ein passives Element ausschließlich aufgrund von optischen Effekten in einem selbstregulierenden, rückgekoppelten System.

Dabei können einzelne Komponenten des optischen Systems 10 genau aufeinander abgestimmt sein, wie z.B. die Wahl des Frequenzkonversionsmediums 25, eine Verzögerung im Feedbackarm 24, eine Filterung von einzelnen Wellenlängen und die Wahl des nichtlinearen Feedbackmediums 26. Weiterhin ist entweder der Auskoppelgrad am Auskoppelelement 22 variabel und/oder einstellbar, oder die Stärke der nichtlinearen Wechselwirkung im Feedbackarm 24 und/oder die Leistung der in den Resonator 20 eingekoppelten Pumplichtpulse 10.

Der Resonator 20 des in Figur 1 gezeigten optischen Systems 1 ist als ein Singeldurchgangsverstärker ausgebildet, in dem die Pumplichtpulse 10 das Frequenzkonversionsmedium 25 (als Verstärkermedium) nur ein einziges Mal durchlaufen. In alternativen Ausführungsformen kann der Resonator 20 auch als ein Mehrfachdurchgangsverstärker ausgebildet sein, bei dem die Pumplichtpulse nicht im Wesentlichen zu 100 % am Auskoppelelement ausgekoppelt werden, sondern zu einem Großteil in den ersten Resonatorarm zurückgekoppelt werden und diesen mehrfach durchlaufen. Ein solcher Mehrfachdurchgangsverstärker würde auch einen separaten Feedbackarm aufweisen, in den der Feedbacklichtpuls getrennt von den Pumplichtpulsen mit dem Feedbackmedium wechselwirkt.

Der Resonator 20 des optischen Systems 1 kann weitere Elemente aufweisen, die nicht in den Figuren dargestellt sind, wie z.B. einen spektralen Filter (z.B. nach dem Feedbackmedium 26) und/oder dispersive Elemente (wie z.B. eine Prismenstrecke) zur Dispersionskompensation oder Pulsstreckung.

**Figuren 2a und 2b** zeigen in Diagrammen unterschiedliche Pulszüge im optischen System 1. Dabei zeigt Figur 2a in einem Diagramm die Pulszüge im Zeitraum und Figur 2b in einem Diagramm die Fouriertransformierte der Pulszüge im Frequenzraum.

Oben ist in Figur 2a der unmodulierte Pumplichtpuls 10 gezeigt, während darunter aus dem optischen System 1 ausgekoppelte modulierte Pulszüge 33a bis 33e gezeigt sind, sowie ein fließend modulierter Pulszug 34 und ein zufällig modulierter Pulszug 35.

Figur 2b zeigt dieselben Pulszüge (also den Pumplichtpuls 10, die modulierten Pulszüge 33a bis 33e, den fließend modulierten Pulszug 34 und den zufällig modulierten Pulszug 35) nach einer Fouriertransformation im Frequenzraum.

In dem in den Figuren 2a und 2b gezeigten Ausführungsbeispiel erfolgt eine Bereitstellung der Pumplichtpulse mit einer Repetitionsfrequenz von ca. 40,9 MHz, also zum Beispiel mit dem oben bereits erwähnten Yb:KGW Laser als Pumplichtquelle. Der Pumplichtpuls 10 weist genau eine Frequenz auf, welche in der Fourierdarstellung in Figur 2b deutlich sichtbar bei 40,9 MHz angeordnet ist.

Die Pulszüge 33a bis 33e sind unterschiedliche aus dem optischen System 1 ausgekoppelte Pulszüge, welche sich aus dem ausgekoppelten, modulierten Lichtpulsen zusammensetzen, z.B. dem Restpumplichtpuls und den beiden Konversionslichtpulsen. Die erzeugten Pulszüge weisen eine starke Modulation auf, die mit einem ganzzahligen Bruchteil der Repetitionsrate der Pumplichtpulse 10 erfolgt.

Es ergibt sich, dass verschiedene Subharmonische der Repetitionsrate als stabile Zustände, also als Attraktoren, im optischen System erzeugt werden können.

Beim ersten Pulszug 33a erfolgt die Modulation mit der halben Repetitionsrate der Pumplichtpulse 10, weswegen im Frequenzraum neben dem Anteil bei ca. 40,9 MHz eine zweite Frequenz bei ca. 20,45 MHz auftritt. Der zugehörige erste Lichtpuls 33a ist in Figur 2a mit seiner Modulation deutlich gezeigt. Diese Modulationseinstellung des ersten Lichtpulses 33a entspricht der in Figur 1 schematisch dargestellten Modulationseinstellung mit den schematischen Pulsformen (a), (b). Die Modulationseinstellung auf den ersten Lichtpuls 33a stellt sich genau dann ein, wenn die Leistung der Pulszüge im optischen System 1 auf einen bestimmten Attraktor eingestellt sind.

Eine Modulationseinstellung auf einen anderen Attraktor kann z.B. in einer Modulation mit einem Drittel der Repetitionsrate resultieren, welche als zweiter Lichtpuls 33b in den Figuren 2a und 2b dargestellt ist. Der dritte Lichtpuls bzw. Pulszug 33c ist mit einer Frequenz von 10,22 MHz entsprechend einem Viertel der Repetitionsrate der Pumplichtpulse moduliert usw.

Jeder der in den Figuren 2a und 2b dargestellten modulierten Pulszüge 33a bis 33e wird genau dann bereitgestellt, wenn das optische System 1 auf einen bestimmten Attraktor eingestellt ist.

Ist das System nicht auf einen Attraktor eingestellt, so kann sich z.B. der fließend modulierte Pulszug 34 oder der zufällig modulierte Pulszug 35 ergeben, deren Intensitäten zufällig variieren kann. Beim fließend modulierten Pulszug 34 ist die Modulation nicht auf die Repetitionsrate fixiert, sondern liegt bei einem nicht ganzzahligen Bruchteil dieser Rate.

Unter dem hochfrequenten modulierten Lichtpuls, der von dem optischen System 1 bereitgestellt wird, wir ein regelmäßig amplitudenmodulierter Lichtpuls verstanden, der z.B. mit einem ganzzahligen Bruchteil der Repetitionsrate der Pumplichtpulse moduliert sein kann. Insbesondere kann ein modulierter Pulszug, der (abhängig von der Repetitionsrate der Pumplichtpulse) wie einer der modulierten Pulszüge 33a bis 33e moduliert ist, als der hochfrequente modulierte Lichtpuls bereitgestellt werden.

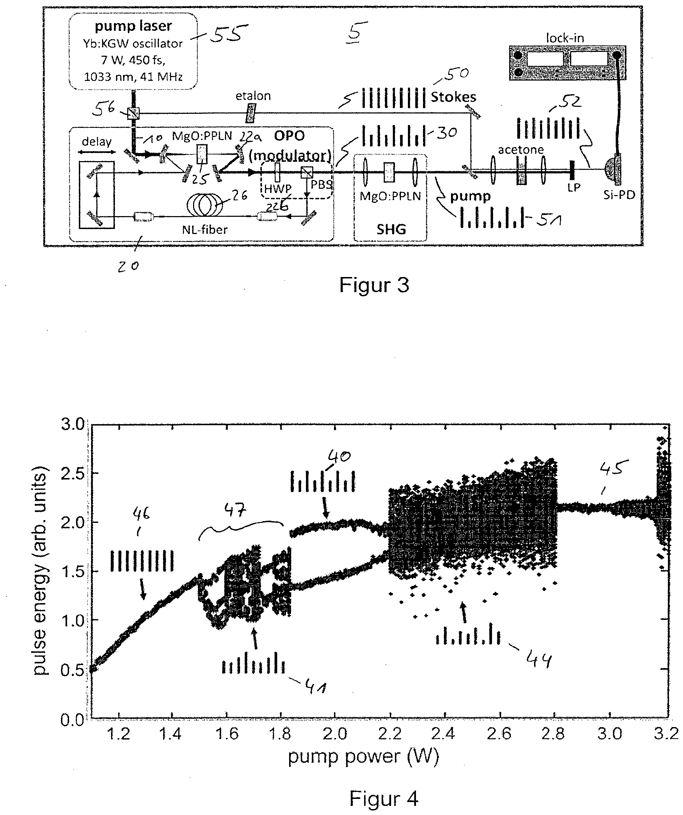

Dies ist genauer in **Figur 4** gezeigt. Figur 4 zeigt in einem Histogramm die Abhängigkeit der Modulation von der Pumpleistung der Pumplichtpulse 10. Allgemein ist die im Resonator des optischen Systems befindliche Pulsleistung genau zu justieren, um das System auf einen Attraktor einzustellen. Die Pulsleistung lässt sich zum Beispiel über eine Regulierung der Energie der Pumplichtpulse einstellen.

In einem Beispiel erfolgt keine Bifurkation der Intensitäten der Pumplichtpulse bei einer Pumpleistung zwischen ca. 1,2 W und ca. 1,5 W. Dieser Bereich ist in Figur 4 als ein erster unmodulierter Bereich 46 dargestellt. Zu sehen ist schematisch, das der resultierende Pulszug keine Modulation aufweist, sondern alle resultierenden Lichtpulse eine gleich hohe Amplitude aufweisen. Mit einer Pumpleistung zwischen ca. 1,2 W und ca. 1,5 W ist das beispielhafte optische System also nicht in der Lage, einen hochfrequenten modulierten Lichtpuls bereitzustellen.

In einem anderen Pumpleistungsbereich, also zum Beispiel in einem Bereich von ca. 1,9 W bis ca. 2,2 W, ergibt sich eine Bifurkation der Pulsintensitäten, die in Figur 4 als erster Attraktor 40 gekennzeichnet ist. Bei dieser Pumpleistungseinstellung ergeben sich im Wesentlichen genau zwei unterschiedliche Amplitudenhöhen der aus dem Resonator ausgekoppelten Lichtpulse. Dies führt zu der in Figur 4 schematisch gezeigten Modulation, die der Modulation des ersten Pulszuges 30a mit der halben Repetitionsfrequenz entspricht. Dieser erste Attraktor 40 ist besonders stabil, was an seiner relativ großen Leistungsbreite zwischen 1,85 W und 2,2 W zu erkennen ist. Auch bei einer leichten Schwankung der Pumpleistung bleibt die Modulation mit der halben Repetitionsfrequenz im ersten Attraktor erhalten.

Wird die Energie hochgeregelt, also zum Beispiel über 2,8 W Pumpleistung, stellt sich ein zweiter unmodulierter Bereich 45 ein, an dem keine eindeutig zu erkennende Modulation im Pulszug auftritt.

In einem Bereich zwischen ca. 2,2 W und ca. 2,8 W ergeben sich keine Attraktoren, sondern vergleichsweise instabile, und deswegen unregelmäßige Modulationen in einem mit dem Bezugszeichen 44 gekennzeichneten instabilen Bereich.

In einem Attraktorbereich 47 zwischen ca. 1,5 W und ca. 1,85 W liegen mehrere andere Attraktoren des optischen Systems. Deutlich gekennzeichnet ist der zweite Attraktor 41 des optischen Systems, der bei ca. 1,58 W Pumpleistung auftritt. Bei diesem zweiten Attraktor ergibt sich der dritte Pulszug 33c aus Figuren 2a und 2b. Der entsprechende Pulszug ist schematisch in Figur 2a gezeigt. Auch die übrigen in den Figuren 2a und 2b gezeigten Attraktoren mit den unterschiedlichen ganzzahligen Vielfachen der Repetitionsrate als Modulationsfrequenz lassen sich in dem Attraktorbereich 47 zwischen ca. 1,5 bis 1,85 W Pumpleistung einstellen.

Gesichert nachgewiesen konnten experimentell Modulationen mit Modulationsfrequenzen bis zu einem Zehntel der Repetitionsfrequenz. Diese Zustände werden jedoch immer instabiler, wobei der erste Attraktor 40 mit der halben Repetitionsrate besonders stabil ausgebildet ist.

Dieser erste Attraktor 40 mit einer Modulationsfrequenz von der Hälfte der Repetitionsfrequenz der Pumplichtpulse ist zudem besonders vorteilhaft für Anwendungen. Diese spezielle Modulation wird auch als "period doubling" oder als Periode-Zwei-Modulation bezeichnet und ist im optischen System 1 stark ausgeprägt.

Für die in Figur 4 gezeigten Attraktoren und Pumpleistungen wurde eine Messung an modulierten Lichtpulsen mit einer Wellenlänge von 1590 nm durchgeführt. Dies entspricht dem Signalpuls eines OPOs, der mit Pumplichtpulsen einer Wellenlänge von ca. 1040 nm gepumpt ist. Für die anderen beteiligten Lichtpulse, also den Restpumplichtpuls sowie den Idlerpuls, fällt das beobachtete Verhalten signifikant anders aus, die Attraktoren für die übrigen Lichtpulse können also bei anderen Leistungen auftreten. Dabei fällt das beobachtete Verhalten, also die Art der unterschiedlichen Attraktoren und der unmodulierten bzw. instabilen Bereiche jeweils ähnlich aus, kann aber unterschiedlich stark ausgeprägt sein.

**Figur 3** zeigt in einer schematischen Darstellung ein Ramanmikroskop 5 für stimulierte Ramanstreuung mit einem optischen System, das ähnlich wie das in Figur 1 gezeigte optische System ausgebildet ist. Figur 3 zeigt somit das erfindungsgemäße optische System implementiert in dem Ramanmikroskop 5. Der Aufbau kann zur Untersuchung einer Probe wie z.B. Aceton verwendet werden. Dabei wird ein unmodulierter Stokespuls 50 zusammen mit einem dazu korrelierten, modulierten Pumppuls 51 durch eine Probe gestrahlt, im gezeigten Beispiel Aceton. Dabei wechselwirken die Stokespulse 50 und Pumppulse 51 auf grundsätzlich bekannte Art und Weise mit der Probe. Durch diese Ramanwechselwirkung werden die Stokespulse zu Wechselwirkungspulsen 52, die von einem Photodetektor detektiert werden. Diese Wechselwirkungspulse 52 enthalten Informationen zur Erstellung eines Datenpunkts im Ramanspektrum. Allgemein ist das Prinzip eines Ramanmikroskops vorbekannt, allerdings nicht unter Verwendung des gezeigten optischen System zur Erzeugung der Stokespulse 50 und Pumppulse 51.

Als Pumplichtquelle 55 dient ein gepulster Laser, wie zum Beispiel ein Yb:KGW Oszillator. Die Pumplichtquelle 55 stellt zunächst hochfrequente Ausgangslichtpulse bereit, von denen ein Anteil an einem Strahlteiler 56 abgespalten und als Referenzlichtpulse verwendet wird, in diesem Fall als Stokespulse 50. Ein restlicher Anteil wird als Pumplichtpulse 10 in den Resonator 20 des optischen Systems eingekoppelt, das den Pumppuls 51 bereitstellt. Im Resonator dient eine NL-Fiber als Feedbackmedium 26 im Feedbackarm, und ein MgO:PPLN als Frequenzkonversionsmedium 25. Das Auskoppelelement ist dabei mehrteilig ausgebildet und weist ein erstes Auskoppelbauteil 22a auf, an dem der Restpumplichtpuls und der Idlerpuls ausgekoppelt werden, jedoch nicht der Signalpuls. Der Signalpuls wird an einem zweiten Auskoppelbauteil 22b des Auskoppelelements teilweise als modulierter Lichtpuls 30 ausgekoppelt, und teilweise als Feedbacklichtpuls in den Feedbackarm zurückgekoppelt.

Das optische System stellt somit passiv den modulierten Lichtpuls 30 bereit, der als Pumppuls 51 des Ramanmikroskops 5 verwendet werden kann, z.B. nach einer Wellenlängeneinstellung an einem SHG-Kristall (Abkürzung von "Second Harmonic Generation").

Die übrigen Elemente des Ramanmikroskops 5 können wie vorbekannt ausgebildet sein.

Das optische System vereinfacht den Aufbau des Ramanmikroskops 5 und ermöglicht die Modulation von Lichtpulsen mit sehr hohen Frequenzen.

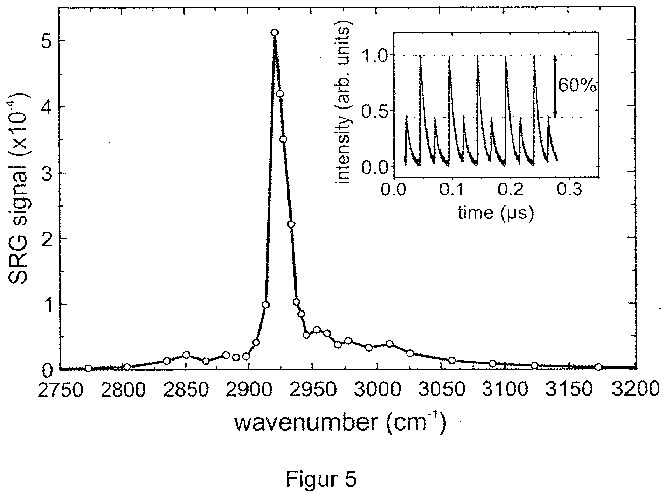

**Figur 5** zeigt in einem Diagramm das Ramanspektrum von Aceton, das mit einem Ramanmikroskop erstellt wurde, bei dem die modulierten Lichtpulsen 30 des optischen Systems als Pumppulse 51 verwendet wurden. Das Ramanspektrum wurde aus den Wechswirkungspulsen 52 erstellt, vgl. Figur 3.

Im optischen System ist das nichtlineare Feedback im Feedbackarm 24 genau ausbalanciert. Dafür wird zum Beispiel eine Selbstphasenmodulation (kurz: SPM), eine Filterung durch eine Verstärkungsbandbreite des Frequenzkonversionsmediums, und/oder eine Gruppengeschwindigkeitsdispersion (kurz: GVD für "Group Velocity Dispersion") zusammen mit einer parametrischen Verstärkung entweder einzeln oder in Zusammenschau eingestellt. Z.B. durch eine Variation des Auskoppelgrades und/oder der Pumpleistung (wie beispielhaft in Figur 4 gezeigt) kann die Modulationsfrequenz und die Modulationstiefe im optischen System 1 durchgestimmt werden. Die Durchstimmung dieses Effekts kann theoretisch durch die Ginsburg-Landau-Gleichung beschrieben werden. Das Verhalten ähnelt einem "period doubling" bzw. "period multiplication" Verhalten in Faserlasern.

Durch die im Resonator 20 bereitgestellten zusätzlichen Wellenlängen (z.B. Signalpuls und Idlerpuls) kann das optische System 1 insbesondere in der Spektroskopie verwendet werden, bei der zwei oder mehr synchronisierte Pulszüge mit unterschiedlichen Wellenlängen benötigt werden. Dabei kann einer der Pulszüge in einer modulierten Form verwendet werden, um Lock-in-Techniken einsetzen zu können.

Im optischen System 1 kann die Erzeugung der modulierten Lichtpulse mit einer unterschiedlichen Wellenlänge (also die beiden Konversionslichtpulse) und die Modulation des Feedbacklichtpulses in einem einzigen Bauteil, nämlich dem optischen Resonator 20, erfolgen. Dadurch weist das optische System 1 eine deutlich reduzierte Komplexität auf.

Mit dem modulierten Restpumplichtpuls und den beiden modulierten Konversionslichtpulsen können insgesamt sogar drei Pulse mit drei unterschiedlichen Wellenlängen als modulierte synchronisierte Lichtpulse bzw. Pulszüge bereitgestellt werden.

Weiterhin kann bei der Modulation sogar die maximal mögliche Modulationsfrequenz erreicht werden, nämlich die halbe Repetitionsrate. Die halbe Repetitionsrate wird zum Beispiel im ersten Attraktor erreicht, der mit der Bezugsziffer 40 in Figur 4 gezeigt ist. Diese Modulation mit der halben Repetitionsrate ermöglicht das bestmögliche Signal-zu-Rausch-Verhältnis bei Lock-in basierten Messmethoden.

In einem Experiment wurde das in Figur 5 gezeigte Ramanspektrum erzielt. Dies zeigt, dass sich das optische System 1 insbesondere für Pump-Probe-Spektroskopie einsetzen lässt und dabei sehr gute Effizienzen erreicht werden können. Das in Figur 5 gezeigte Ramanspektrum basiert auf stimulierter Ramanstreuung und wurde mit einer Modulationsfrequenz von 20,5 MHz durchgeführt, was der halben Repetitionsrate entspricht.

### Bezugszeichenliste

- 1: optisches System
- 5: Ramanmikroskop
- 10: Pumplichtpuls
- 20: Resonator
- 21: Einkoppelelement
- 22: Auskoppelelement
- 22a: erstes Auskoppelbauteil
- 22b: zweites Auskoppelbauteil
- 23: erster Resonatorarm
- 24: Feedbackarm
- 25: Frequenzkonversionsmedium
- 26: Feedbackmedium
- 27a: erster Umlenkspiegel
- 27b: zweiter Umlenkspiegel
- 30: modulierter Lichtpuls
- 31: Restpumplichtpuls
- 32: Feedbacklichtpuls
- 33a-33e: modulierte Pulszüge
- 34: fließend modulierter Pulszug
- 35: zufällig modulierter Pulszug
- 40: erster Attraktor
- 41: zweiter Attraktor
- 44: instabiler Bereich
- 45: zweiter unmodulierter Bereich
- 46: erster unmodulierter Bereich
- 47: Attraktorbereich
- 50: Stokespuls
- 51: Pumppuls
- 52: Wechselwirkungspuls
- 55: Pumplichtquelle
- 56: Strahlteiler

## Patentansprüche

1. Optisches System zur Bereitstellung einer Abfolge von hochfrequenten Lichtpulsen (30; 31), welche bezüglich ihrer Amplitude moduliert sind, mit
- einer Pumplichtquelle (55) zur Bereitstellung von hochfrequenten Pumplichtpulsen (10) mit einer im Wesentlichen gleich großen Amplitude;
- einem optischen Resonator (20) mit einem Einkoppelelement (21) zum Einkoppeln der Pumplichtpulse (10) in den Resonator (20) und einem Auskoppelelement (22) zum Auskoppeln der hochfrequenten modulierten Lichtpulse (30; 31) aus dem Resonator (20) und
- einem im Resonator (20) angeordneten, optisch nichtlinearen Frequenzkonversionsmedium (25) ausgelegt zum Umwandeln der Pumplichtpulse (10) in jeweils zwei Konversionslichtpulse und einen Restpumplichtpuls (31);
wobei der Resonator (20) einen Feedbackarm (24) für zumindest einen der zwei Konversionslichtpulse und/oder den Restpumplichtpuls (31) aufweist, in dem ein optisch nichtlineares Feedbackmedium (26) ausgelegt zur rein passiven und rein optischen Selbstphasenmodulation des zumindest einen Konversionslichtpulses und/oder des Restpumplichtpulses (31) angeordnet ist, wobei alle am Auskoppelement (22) ausgekoppelten Lichtpulse (30; 31) eine Amplitudenmodulation mit einem ganzzahligen Bruchteil einer Repetitionsrate der Pumplichtpulse (10) aufweisen.

2. Optisches System nach Anspruch 1, wobei eine nichtlineare Phasenverschiebung des zumindest einen der zwei Konversionslichtpulse und/oder des Restpumplichtpulses im Feedbackmedium (26) auf einen Attraktor des optischen Systems (1) eingestellt ist.

3. Optisches System nach Anspruch 1 oder 2, wobei der Resonator (20) als optisch parametrischer Oszillator ausgebildet ist, der von den Pumplichtpulsen (10) synchron gepumpt ausgebildet ist, und der die beiden Konversionslichtpulse als Signalpuls und Idlerpuls erzeugt.

4. Optisches System nach Anspruch 3, wobei im Feedbackarm (24) genau einer der drei folgenden Pulse optisch moduliert wird:
- ein erster der zwei Konversionslichtpulse als der Signalpuls,
- ein zweiter der zwei Konversionslichtpulse als der Idlerpuls oder
- der Restpumplichtpuls (31);
und wobei die optische Modulation des einen der drei voranstehenden Pulse eine dazu korrelierte Modulation der anderen beiden der voranstehenden Pulse bewirkt.

5. Optisches System nach einem der vorangegangenen Ansprüche, wobei die Pumplichtquelle (55) die hochfrequenten Pumplichtpulse (10) mit einer Repetitionsrate von zumindest 1 MHz bereitstellt.

6. Optisches System nach einem der vorangegangenen Ansprüche, wobei der Restpumplichtpuls (31) und/oder zumindest einer der zwei Konversionslichtpulse als der hochfrequente modulierte Lichtpuls (30) aus dem Resonator (20) ausgekoppelt wird.

7. Optisches System nach einem der vorangegangenen Ansprüche, wobei die Pumplichtquelle (55) zunächst hochfrequente Ausgangslichtpulse bereitstellt, die ein Strahlteiler (56) aufteilt in die hochfrequenten Pumplichtpulse (10) zum Einkoppeln in den Resonator (20) einerseits, und in hochfrequente Referenzlichtpulse andererseits.

8. Optisches System nach Anspruch 7, wobei das System (1) dazu ausgebildet und vorgesehen ist, die hochfrequenten Referenzlichtpulse so bereitzustellen, dass diese mit den hochfrequenten modulierten Lichtpulsen (30) korreliert sind.

9. Optisches System nach Anspruch 8, wobei die hochfrequenten Referenzlichtpulse und die hochfrequenten modulierten Lichtpulse (30) als Stokespulse (50) und Pumppulse (51) in einem Ramanmikroskop (5) ausgebildet und vorgesehen sind.

10. Optisches System nach einem der vorangegangenen Ansprüche, mit einer Leistungseinstellvorrichtung zum Einstellen der Leistung der in den Resonator (20) eingekoppelten Pumplichtpulse (10).

11. Optisches System nach einem der vorangegangenen Ansprüche, wobei ein Auskoppelgrad des Auskoppelements (22) einstellbar ausgebildet ist.

12. Optisches System nach einem der vorangegangenen Ansprüche, wobei das Auskoppelelement (22) so ausgebildet und angeordnet ist, dass der Restpumplichtpuls (31) und ein erster der zwei Konversionslichtpulse vollständig ausgekoppelt werden, während der zweite der zwei Konversionslichtpulse zumindest teilweise in den Feedbackarm (24) umgelenkt wird.

13. Optisches System nach einem der vorangegangenen Ansprüche, wobei der Feedbackarm (24) als separater Feedbackarm ausgebildet ist, der räumlich getrennt ist von einem Resonatorarm (23) des Resonators (20), in dem das Frequenzkonversionsmedium (25) angeordnet ist.

14. Optisches System nach einem der vorangegangenen Ansprüche, wobei der bereitgestellte hochfrequente Lichtpuls (30) ausschließlich optisch moduliert ist.

15. Verfahren zum Bereitstellen einer Abfolge von hochfrequenten Lichtpulsen (30; 31), welche bezüglich ihrer Amplitude moduliert sind, wobei
- hochfrequente Pumplichtpulse (10) mit einer im Wesentlichen gleich großen Amplitude bereitgestellt werden;
- die hochfrequenten Pumplichtpulse (10) in einen optischen Resonator (20) eingekoppelt werden;
- im Resonator (20) die Pumplichtpulse (10) optisch nichtlinear umgewandelt werden in jeweils zwei Konversionslichtpulse und einen Restpumplichtpuls (31); und
- die hochfrequenten modulierten Lichtpulse (30; 31) aus dem Resonator (20) ausgekoppelt werden;
wobei in einem Feedbackarm (24) des Resonators (20) zumindest einer der zwei Konversionslichtpulse und/oder der Restpumplichtpuls (31) mittels eines optisch nichtlinearen Feedbackmediums (26) rein passiv und rein optisch selbstphasenmoduliert wird, und wobei alle am Auskoppelement (22) ausgekoppelten Lichtpulse (30; 31) eine Amplitudenmodulation mit einem ganzzahligen Bruchteil einer Repetitionsrate der Pumplichtpulse (10) aufweisen.

## Claims

1. An optical system for providing a sequence of high-frequency light pulses (30; 31) which are modulated with regard to their amplitude, having
- a pump light source (55) for providing high-frequency pump light pulses (10) with an essentially same-sized amplitude;
- an optical resonator (20) having a coupling element (21) for coupling the pump light pulses (10) into the resonator (20) and a decoupling element (22) for decoupling the high-frequency modulated light pulses (30; 31) from the resonator (20), and
- an optically non-linear frequency conversion medium (25) arranged in the resonator (20) designed for transforming the pump light pulses (10) in each case into two conversion light pulses and one residual pump light pulse (31);
wherein the resonator (20) has a feedback arm (24) for at least one of the two conversion light pulses and/or the residual pump light pulse (31), in which an optically non-linear feedback medium (26) designed for purely passive and purely optical self-phase modulation of the at least one conversion light pulse and/or of the residual pump light pulse (31) is arranged, wherein all of the light pulses (30; 31) decoupled on the decoupling element (22) have an amplitude modulation with an integer fraction of a repetition rate of the pump light pulses (10).

2. The optical system according to Claim 1, wherein a non-linear phase shift of the at least one of the two conversion light pulses and/or of the residual pump light pulse in the feedback medium (26) is adjusted to an attractor of the optical system (1).

3. The optical system according to Claim 1 or 2, wherein the resonator (20) is configured as an optical parametric oscillator which is configured to be pumped synchronously by the pump light pulses (10), and which generates the two conversion light pulses as a signal pulse and an idler pulse.

4. The optical system according to Claim 3, wherein exactly one of the three following pulses is optically modulated in the feedback arm (24):
- a first of the two conversion light pulses as the signal pulse,
- a second of the two conversion light pulses as the idler pulse, or
- the residual pump light pulse (31);
and wherein the optical modulation of the one of the three above-mentioned pulses brings about a correlating modulation of the other two of the above-mentioned pulses.

5. The optical system according to any one of the preceding claims, wherein the pump light source (55) provides the high-frequency pump light pulses (10) with a repetition rate of at least 1 MHz.

6. The optical system according to any one of the preceding claims, wherein the residual pump light pulse (31) and/or at least one of the two conversion light pulses is/are decoupled from the resonator (20) as the high-frequency modulated light pulse (30).

7. The optical system according to any one of the preceding claims, wherein the pump light source (55) initially provides high-frequency output light pulses which are divided by a beam splitter (56) into the high-frequency pump light pulses (10) for coupling into the resonator (20) on the one hand, and into high-frequency reference light pulses on the other hand.

8. The optical system according to Claim 7, wherein the system (1) is configured and provided to provide the high-frequency reference light pulses such that the latter correlate with the high-frequency modulated light pulses (30).

9. The optical system according to Claim 8, wherein the high-frequency reference light pulses and the high-frequency modulated light pulses (30) are configured and provided as Stokes pulses (50) and pumped pulses (51) in a Raman microscope (5).

10. The optical system according to any one of the preceding claims, having an output adjustment device for adjusting the output of the pump light pulses (10) that are coupled into the resonator (20).

11. The optical system according to any one of the preceding claims, wherein a decoupling coefficient of the decoupling element (22) is configured to be adjustable.

12. The optical system according to any one of the preceding claims, wherein the decoupling element (22) is configured and arranged such that the residual pump light pulse (31) and a first of the two conversion light pulses are completely decoupled, while the second of the two conversion light pulses is at least partly deflected into the feedback arm (24).

13. The optical system according to any one of the preceding claims, wherein the feedback arm (24) is configured as a separate feedback arm which is spatially separated from a resonator arm (23) of the resonator (20), in which the frequency conversion medium (25) is arranged.

14. The optical system according to any one of the preceding claims, wherein the provided high-frequency light pulse (30) is modulated exclusively in an optical fashion.

15. A method for providing a sequence of high-frequency light pulses (30; 31) which are modulated with regard to their amplitude, wherein
- high-frequency pump light pulses (10) with an essentially same-sized amplitude are provided;
- the high-frequency pump light pulses (10) are coupled into an optical resonator (20);
- the pump light pulses (10) are optically non-linearly transformed in each case into two conversion light pulses and a residual pump light pulse (31) in the resonator (20); and
- the high-frequency modulated light pulses (30; 31) are decoupled from the resonator (20);
wherein in a feedback arm (24) of the resonator (20) at least one of the two conversion light pulses and/or the residual pump light pulse (31) undergo(es) purely passive and purely optical self-phase modulation by means of an optically non-linear feedback medium (26), and wherein all of the light pulses (30; 31) decoupled on the decoupling element (22) have an amplitude modulation with an integer fraction of a repetition rate of the pump light pulses (10).

## Revendications

1. Système optique destiné à fournir une série d'impulsions de lumière à haute fréquence (30; 31), lesquelles sont modulées quant à leur amplitude, comprenant
- une source de lumière de pompage (55) destinée à fournir des impulsions de lumière de pompage à haute fréquence (10) avec une amplitude substantiellement égale ;
- un résonateur optique (20) avec un élément de couplage (21) pour le couplage des impulsions de lumière de pompage (10) dans le résonateur (20) et un élément de découplage (22) pour le découplage des impulsions de lumière modulées à haute fréquence (30 ; 31) à partir du résonateur (20) et
- un moyen de conversion de fréquence (25) non linéaire optiquement, disposé dans le résonateur (20), conçu pour convertir les impulsions de lumière de pompage (10) respectivement en deux impulsions de lumière de conversion et une impulsion de lumière de pompage résiduelle (31) ;
dans lequel le résonateur (20) présente un bras de rétroaction (24) pour l'une au moins des deux impulsions de lumière de conversion et/ou pour l'impulsion de lumière de pompage résiduelle (31), dans lequel est disposé un moyen de rétroaction (26) non linéaire optiquement, conçu pour l'auto-modulation de phase purement passive et purement optique de l'au moins une impulsion de lumière de conversion et/ou de l'impulsion de lumière de pompage résiduelle (31), dans lequel toutes les impulsions de lumière (30; 31) découplées sur l'élément de découplage (22) présentent une modulation d'amplitude avec une fraction entière d'un taux de répétition des impulsions de lumière de pompage (10).

2. Système optique selon la revendication 1, dans lequel un décalage de phase non linéaire de l'au moins une des deux impulsions de lumière de conversion et/ou de l'impulsion de lumière de pompage résiduelle est réglé dans le moyen de rétroaction (26) sur un attracteur du système optique (1).

3. Système optique selon la revendication 1 ou 2, dans lequel le résonateur (20) est configuré comme un oscillateur optiquement paramétrique, lequel est configuré de manière à être pompé de façon synchrone par les impulsions de lumière de pompage (10), et lequel produit les deux impulsions de lumière de conversion en tant qu'impulsion de signal et impulsion Idler.

4. Système optique selon la revendication 3, dans lequel l'une précisément des trois impulsions suivantes est modulée optiquement :
- une première des deux impulsions de lumière de conversion en tant qu'impulsion de signal,
- une deuxième des deux impulsions de lumière de conversion en tant qu'impulsion Idler ou
- l'impulsion de lumière de pompage résiduelle (31) ;
et dans lequel la modulation optique de l'une des trois impulsions mentionnées ci-dessus provoque une modulation correlée des deux autres impulsions mentionnées précédemment.

5. Système optique selon l'une des revendications précédentes, dans lequel la source de lumière de pompage (55) fournit les impulsions de lumière de pompage à haute fréquence (10) avec un taux de répétition d'au moins 1 MHz.

6. Système optique selon l'une des revendications précédentes, dans lequel l'impulsion de lumière de pompage résiduelle (31) et/ou du moins l'une des deux impulsions de lumière de conversion est/sont découplée(s) à partir du résonateur (20) en tant qu'impulsion de lumière modulée à haute fréquence (30).

7. Système optique selon l'une des revendications précédentes, dans lequel la source de lumière de pompage (55) fournit tout d'abord des impulsions de lumière de sortie à haute fréquence, lesquelles sont divisées par un diviseur de faisceau (56) d'une part en impulsions de lumière de pompage à haute fréquence (10) destinées à être couplées dans le résonateur (20) et d'autre part en impulsions de lumière de référence à haute fréquence.

8. Système optique selon la revendication 7, dans lequel le système (1) est configuré et prévu pour fournir les impulsions de lumière de référence à haute fréquence de manière à les corréler aux impulsions de lumière modulées à haute fréquence (30).

9. Système optique selon la revendication 8, dans lequel les impulsions de lumière de référence à haute fréquence et les impulsions de lumière modulées à haute fréquence (30) sont configurées et prévues comme des impulsions de Stokes (50) et des impulsions de pompage (51) dans un microscope de Raman (5).

10. Système optique selon l'une des revendications précédentes, comprenant un dispositif de réglage de puissance destiné à régler la puissance des impulsions de lumière de pompage (10) couplées dans le résonateur (20).

11. Système optique selon l'une des revendications précédentes, dans lequel un degré de découplage de l'élément de découplage (22) est configuré de façon réglable.

12. Système optique selon l'une des revendications précédentes, dans lequel l'élément de découplage (22) est configuré et disposé de telle façon que l'impulsion de lumière de pompage résiduelle (31) et une première des deux impulsions de lumière de conversion sont entièrement découplées, tandis que la deuxième des deux impulsions de lumière de conversion est au moins partiellement déviée dans le bras de rétroaction (24).

13. Système optique selon l'une des revendications précédentes, dans lequel le bras de rétroaction (24) est configuré comme un bras de rétroaction séparé, lequel est spatialement indépendant d'un bras de résonateur (23) du résonateur (20), dans lequel est disposé le moyen de conversion de fréquence (25).

14. Système optique selon l'une des revendications précédentes, dans lequel l'impulsions de lumière à haute fréquence (30) fournie est modulée de façon exclusivement optique.

15. Procédé destiné à fournir une série d'impulsions de lumière à haute fréquence (30 ; 31), lesquelles sont modulées quant à leur amplitude, dans lequel
- des impulsions de lumière de pompage à haute fréquence (10) sont fournies avec une amplitude substantiellement égale ;
- les impulsions de lumière de pompage à haute fréquence (10) sont couplées dans un résonateur optique (20) ;
- dans le résonateur (20), les impulsions de lumière de pompage (10) sont converties de façon optiquement non linéaire, respectivement en deux impulsions de lumière de conversion et une impulsion de lumière de pompage résiduelle (31) ; et
- les impulsions de lumière modulées à haute fréquence (30; 31) sont découplées à partir du résonateur (20) ;
dans lequel l'une au moins des deux impulsions de lumière de conversion et/ou l'impulsion de lumière de pompage résiduelle (31) est/sont auto-modulée(s) en phase de façon purement passive et purement optique dans un bras de rétroaction (24) du résonateur (20) à l'aide d'un moyen de rétroaction (26) non linéaire optiquement, et dans lequel toutes les impulsions de lumière (30; 31) découplées sur l'élément de découplage (22) présentent une modulation d'amplitude avec une fraction entière d'un taux de répétition des impulsions de lumière de pompage (10).
